# EUROPEAN PATENT SPECIFICATION

(11) **EP 1 971 142 B1**
(45) Date of publication and mention of the grant of the patent: **19.12.2012**
(21) Application number: 07005296.4
(22) Date of filing: 14.03.2007
(51) Int. Cl.: H04N 5/46, H04N 5/445

(54) **Method for displaying video pictures**
Verfahren zur Anzeige von Videobildern
Procédé pour l'affichage d'images vidéo

(43) Date of publication of application: 17.09.2008
(73) Proprietor: Sony Deutschland GmbH, 10785 Berlin (DE)
(72) Inventor: Beermann, Andreas, 70327 Stuttgart (DE)
(74) Representative: Müller - Hoffmann & Partner

(56) References cited:
- US-A1- 2002 085 648
- US-A1- 2002 166 122
- US-A1- 2005 073 609
- US-A1- 2005 235 312
- US-A1- 2006 184 992
- US-A1- 2006 282 870
- CAZOULAT R ET AL: "On the usage of LASER video for mobile broadcast" ISO/IEC JTC1/SC29/WG11 MPEG/M12032, XX, XX, 17 April 2005 (2005-04-17), pages 1-7, XP002356491
- SCHUCHERT A ET AL: "FRONT END ARCHITECTURES FOR MULTISTANDARD DIGITAL TV RECEIVERS", IEEE TRANSACTIONS ON CONSUMER ELECTRONICS, IEEE SERVICE CENTER, NEW YORK, NY, US, vol. 46, no. 3, 1 August 2000 (2000-08-01) , pages 422-427, XP001142863, ISSN: 0098-3063, DOI: 10.1109/30.883388

## Description

An embodiment of the invention relates to a method of displaying video pictures. A further embodiment of the invention relates to a receiver providing a video picture.

### BACKGROUND OF THE INVENTION

Today, a large number of television channels exist and it is expected that the number of television channels will further increase in the future. In order to provide an overview of a large number of television channels thumbnail views may be used. A thumbnail view shows a plurality of small pictures, i.e. thumbnails, on one screen.

In order to increase user's acceptance, it is desirable that the thumbnails show the live television picture of the corresponding television channel, i.e. each thumbnail picture should continuously be updated in real-time. In other words, each thumbnail picture should be a moving video picture corresponding to the live picture of a respective television channel.

In prior art, thumbnails of a thumbnail view are often only updated within a certain interval of time, i.e. no live pictures are shown as thumbnails but still pictures that are updated once in a while.

US 2002/0166122 A1 describes an image-oriented electronic programming guide system, wherein programming choices are represented as reduced video images of real-time programming displayed in individual image areas. The reduced video images may be thumbnail video streams of low resolution which are streamed over a preview channel produced at a broadcast head-end. According to another embodiment the tuner sequentially tunes through a plurality of channels to determine the contents of the individual image areas.

US 2005/0073609 A1 refers to a digital broadcasting apparatus including a plurality of tuners which receive broadcast signals based on different broadcasting standards. US 2005/0235312 A1 describes a channel selection canvas that allows a user to preview and choose video signals to be watched on a basis of video thumbnails, which can be full motion video, slow motion video or sampled video snapshots. A video selection engine samples multiple video streams to display in the channel selection canvas.

US 2006/0282870 A1 describes a digital video receiving system comprising two receiving modules used for receiving two digital video signals according to two different communication protocols. A determination unit selects the receiving mode in dependence on a power supply status of the digital video receiving system.

### BRIEF SUMMARY OF THE INVENTION

It is an object of the invention to provide a method of displaying video pictures, wherein thumbnails of a thumbnail view correspond to live picture of a corresponding television channel. It is a further object of the invention to provide a receiver generating an output signal for a display, which output signal comprises a thumbnail view of live video pictures.

These objects are achieved by a method and receiver according to claims 1 and 10. respectively.

Further details of the invention will become apparent from a consideration of the drawings and ensuing description.

### BRIEF DESCRPITION OF THE SEVERAL VIEWS OF THE DRAWINGS

Fig. 1 shows a flowchart of an embodiment of the invention;
Fig. 2 shows a flowchart of a further embodiment of the invention;
Fig. 3 shows a flowchart of a further embodiment of the invention;
Fig. 4 shows still a further flowchart of a further embodiment of the invention;
Fig. 5 shows a receiver according to an embodiment of the invention;
Fig. 6 shows a receiver according to a further embodiment of the invention;
Fig. 7 shows a block diagram of a further embodiment of the invention;
Fig. 8 shows a further block diagram for explaining differences between digital video broadcast terrestrial (DVB-T) and digital video broadcast handheld (DVB-H) operation.

### DETAILED DESCRIPTION OF THE INVENTION

In the following, embodiments of the invention are described. It is important to note, that all described embodiments in the following may be combined in any way as defined in the claims, i.e. there is no limitation that certain described embodiments and/or features may not be combined with other embodiments and/or features.

According to an example, a method of displaying video pictures may comprise: receiving a first video signal or a stream of a first standard, which first video signal or stream comprises a first video picture, displaying said first video picture, receiving a second video signal or stream of a second standard, which second video signal or stream comprises at least one second video picture, wherein said second standard is different from said first standard, switching to a thumbnail view, and displaying said at least one second video signal in said thumbnail view.

The first and second standard can e.g. be a transmission standard, television standard, compression standard or coding standard. The term "standard" thus defines e.g. the needed bandwidth for transmission of a video picture when transmitted, the size of the picture, a frequency or frequency range used for transmission, the format of a data stream used for transmission and/or the like. The first and second video signal may be broadcast signals e.g. transmitted via satellite, terrestrial, via cable or wireless. It is, however, also possible that the first and second video picture are transmitted via the internet and the first and second standard correspond to different standards of coding.

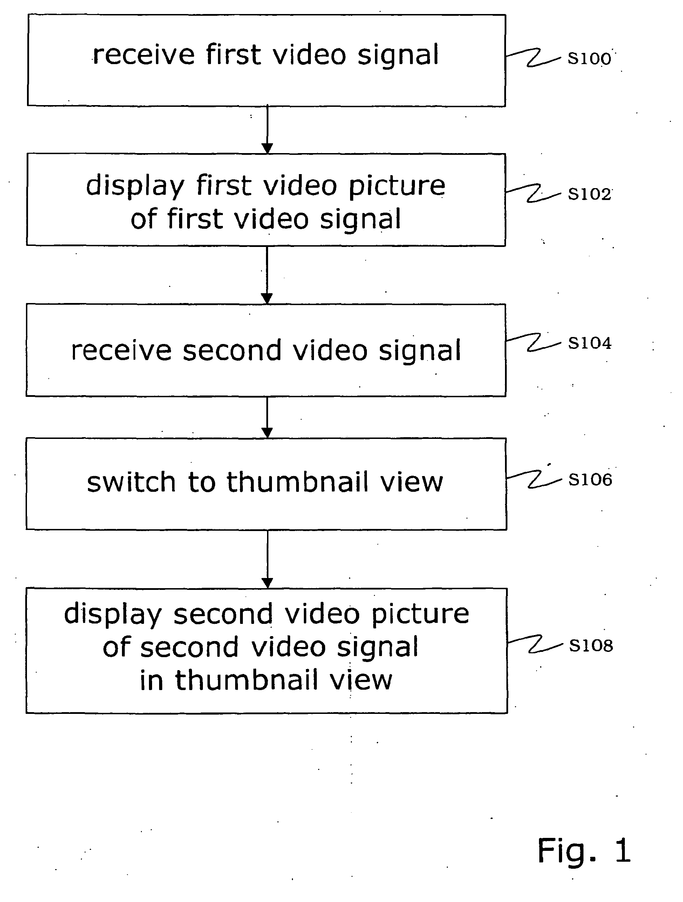

As seen in Fig. 1, in a first step, S100, the first video signal is received, and in a second step S102, the first video picture included in said first video signal is displayed. The first video picture may be displayed in full screen and may e.g. correspond to the video picture of a television channel currently viewed by a user.

In step S104 a second video signal is received which comprises at least one second video picture. It is possible that said second video signal comprises a plurality of video pictures, e.g. transmitted at a same frequency, within a same frequency band and/or within a same data stream. In this case, the first video picture may be transmitted at a different frequency, within a different frequency range and/or within a different data stream.

In step S106, switching to the thumbnail view occurs.

In step S108 the at least one second video picture is displayed in the thumbnail view, i.e. each video picture of said second video signal is displayed as a thumbnail.

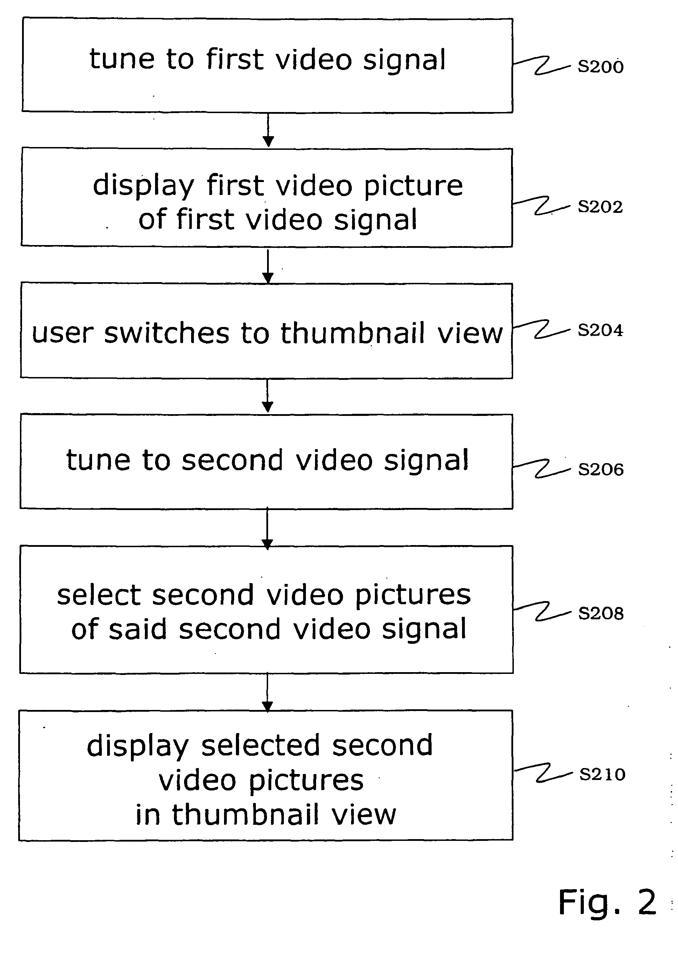

Fig. 2 shows a further embodiment, wherein in step S200, e.g. a tuner tunes to the first video signal. In step S202, the first video picture of the first video signal is displayed.

In step S204 the user may switch to thumbnail view, e.g. by pressing a respective button on a remote control of a television set or receiver. Therefore, in step S206, tuning to the second video signal occurs. If the second video signal is transmitted at a different frequency, different frequency band or different video stream than said first video signal, the tuner may tune to the frequency/data stream of the second video signal upon the switching operation.

As mentioned, it is possible, that the second video signal comprises a plurality of second video pictures corresponding to different television channels. However, it is possible that not all second video pictures included in said second video signal shall be displayed in thumbnail view. Therefore, in step S208, second video pictures of the second video signal may be selected.

In step S210, the selected second video pictures are displayed in thumbnail view.

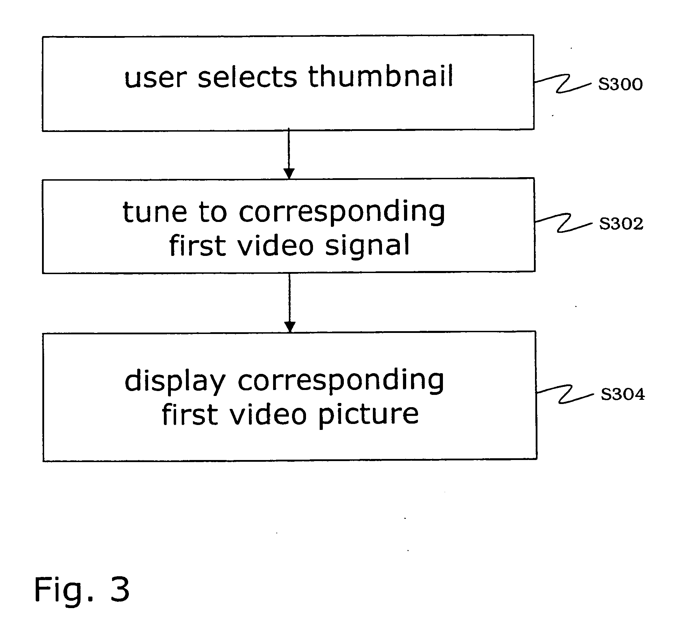

As shown in Fig. 3, it is possible that the user may select a displayed thumbnail of a thumbnail view. In step S300 shown in Fig. 3, the user selects a thumbnail.

Upon selection of a certain thumbnail corresponding to a second video picture of said second video signal, in step S302, tuning to a corresponding first video signal occurs. The corresponding first video signal corresponds to the television channel of the selected thumbnail. For example, if the user selects a thumbnail corresponding to the television channel CNN, then tuning to the first video signal corresponding to the television channel CNN may occur. Thereby, it is possible that tuning to a corresponding frequency/data stream occurs, wherein the frequency/ data stream is determined by the corresponding television channel, in the example, CNN. In other words, upon selection of a thumbnail that is transmitted within the second video signal, tuning to the first video signal occurs, wherein e.g. the tuning frequency depends on the selected thumbnail.

In step S304, the corresponding decoded first video picture is displayed. Thus, according to this embodiment of the invention, the user is able to select a television channel by selecting a thumbnail, which thumbnail is transmitted by the second video signal, wherein, upon selection of a thumbnail, tuning to a corresponding first video signal occurs, and the corresponding first video picture is displayed.

In an embodiment, the first standard may be a full resolution video standard, e.g. enabling transmission of said first video picture in full resolution, and said second standard may be a reduced resolution standard, e.g. enabling transmission of said at least one second video signal with reduced resolution. Because said second video standard allows transmission of video pictures with reduced resolution, the need bandwidth for enabling the thumbnail view may be reduced.

In a further example, said first video standard may be selected from the group consisting of analogue television standard, digital video broadcast terrestrial standard (DVB-T), digital video broadcast cable standard (DVB-C), digital video broadcast satellite standard (DVB-S), broadband internet protocol television standard (IP-TV) and/or said second standard may be selected from the group consisting of digital video broadcast handheld standard (DVB-H), digital multimedia broadcast terrestrial standard (T-DMB), and narrowband internet protocol television standard (IP-TV).

In a further embodiment, the second standard may enable transmission of a video picture with a lower bandwidth than said first standard. For example, in said second standard, a video picture may be smaller than in said first standard. Also, it is possible that, in said second standard, a higher compression of a video picture may occur than in said first standard. Still further, it is possible that in said second standard a lower frame rate, e.g. 12,5 frames per second, is used than in said first standard. In said first standard e.g. a frame rate of 25 frames per second is used.

In a further embodiment, the second video signal may comprise at least two second video pictures that are transmitted at a same frequency, within a same frequency band and/or within a same data stream. It is, thus, possible that the second standard allows transmitting of a plurality of video pictures at one frequency, within one frequency band and/or within one data stream. Also, the second video signal may comprise a larger number of video pictures, e.g. 10 to 20, 20 to 30, or even more. In general, the second video signal and/or the second video standard may allow to decode a large number of e.g. television channels at the same time, and the first video signal and/or first video standard may only allow decoding a small number of channels. Maybe the first video signal does not allow decoding the channels that should be displayed in the current thumbnail view.

According to the invention, the first standard is the digital video broadcast terrestrial standard (DVB-T) and the second standard is the digital video broadcast handheld standard (DVB-H). In this case, the first video signal may comprise 4 to 5 television channels, i.e. video pictures, and the second video signal may comprise 20 to 30 services, i.e. television channels/video pictures, per frequency and/or frequency band. If the first standard is the digital video broadcast terrestrial standard (DVB-T) and the second standard is the digital video broadcast handheld standard (DVB-H) it may be possible that a same physical layer may be used and only different software needs to be provided on top of this same physical layer. In other words, according to this embodiment, there may be no or only very few hardware adaptations necessary to a prior art DVB-T receiver.

According to the invention, the first and second video signals are decoded using a same tuner, a same de-multiplexer and/or a same hardware. Thus, according to this embodiment, it may be possible to only provide one tuner and only one de-multiplexer. Both, the tuner and the de-multiplexer are- used to selectively tune to and decode a DVB-T or DVB-H signal.

According to the invention, when switching to the thumbnail view, the same tuner may be tuned to the second video signal of the digital video broadcast handheld standard DVB-H. In other words, upon switching to the thumbnail view, e.g. a receiver may start decoding a plurality of second video pictures provided by a DVB-H signal.

According to the invention, the first video picture may correspond to a television channel which is selected from a set of available or predetermined television channels of the digital video broadcast terrestrial standard (DVB-T), and the second video pictures of the thumbnail view may comprise only video pictures corresponding to the available or predetermined television channels. For example, HBO and CNN may be available television channels in DVB-T standard. In DVB-H standard there is also BBC available, which is, however, not available in DVB-T standard. Because only HBO and CNN are available in DVB-T standard, only HBO and CNN are displayed in the thumbnail view and not BBC.

In a further embodiment, if no second video picture corresponding to a respective available or predetermined television channel of the digital video broadcast terrestrial standard (DVB-T) is available, a message is displayed in the thumbnail view instead of the thumbnail, indicating that no preview of the respective channel is available. In the example from above, there may be a local television channel available in DVB-T standard, which local television channel is, however, not available in DVB-H standard. Thus, in the thumbnail view, instead of a thumbnail for the local television channel, a blank thumbnail would appear possibly comprising a message such as e.g. "no preview available".

In a further embodiment, a certain television channel may be selectable within the thumbnail view by moving a cursor to a certain thumbnail.

Further, it may be possible, that, upon selection of a certain television channel, the tuner is tuned to a selected first video signal corresponding to the certain television channel in said digital video broadcast terrestrial standard (DVB-T). For example, the thumbnail view may show thumbnails of CNN and HBO. By moving the cursor to the thumbnail of CNN and selecting this thumbnail, the tuner is tuned to the first video signal corresponding to the DVT-T signal of CNN.

In a further embodiment, the at least one second video picture may be used without resizing for the thumbnail view. As mentioned above, in an embodiment of the invention, it is possible that the second standard allows transmission of video pictures with a lower needed bandwidth than said first standard. As also mentioned above, this may be achieved, because in said second standard, the video picture is smaller than in said first video picture. Thus, it may be possible to use the decoded second video pictures without resizing. This way, needed hardware and/or processing power may be reduced.

In a further embodiment of the invention, a computer program product, e.g. a computer readable medium or downloadable executable or pre-installed program on a computer and/or signal processing means, may be provided, including computer program instructions that cause a computer to execute a method of displaying video pictures as explained above.

In a further example, a receiver may comprise a tuner configured to tune to a first video signal comprising a first video picture of a first standard, and further configured to tune to a second video signal comprising at least one second video picture of a second video standard, which is different from said first standard, and further configured to provide a respective video stream or video signal comprising said first and second video picture, respectively. The tuner or receiver may further comprise an output signal generating mechanism configured to generate an output signal for a display, e.g. a display of a television, wherein, if said tuner is tuned to said first video signal, said output signal comprises said first video picture, and else, if said tuner is tuned to said second video signal, said output signal comprises a thumbnail view of said at least one second video picture.

According to the invention, the tuner may be the only tuner of the receiver.

The receiver, in a further embodiment, may further comprise a selection mechanism, configured to allow selection of a user selected second video picture of said thumbnail view, wherein, upon selection of said user selected thumbnail, said tuner tunes to a certain first video signal comprising a same video picture as said user selected second video picture and provides a video stream comprising said first video picture.

In still a further example, a method of displaying video pictures may comprise: displaying a first video picture of a first standard, receiving at least one second video picture of a second standard which is different from said first standard, switching to a thumbnail view, and displaying said at least one second video picture in said thumbnail view.

In a further example, means for displaying video pictures may be provided, comprising: means for displaying a first video picture of a first standard, means for receiving at least one second video picture of a second standard which is different from said first standard, means for switching to a thumbnail view, and means for displaying said at least one second video picture in said thumbnail view.

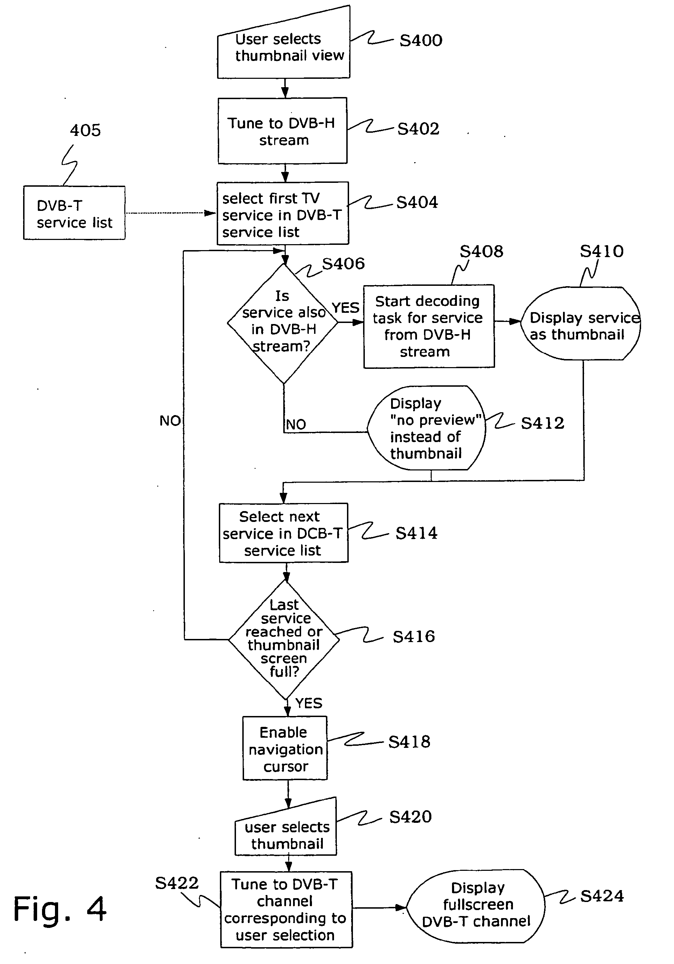

Fig. 4 shows a further embodiment of the invention, wherein, in step S400 a user selects the thumbnail view.

Upon selection of the thumbnail view in step S400, in step S402, the tuner tunes to the DVB-H signal, also referred to as DVB-H stream.

Then, in step S404, the first television service in a DVB-T service list 405 is selected. The DVB-T service list 405 e.g. comprises all television channels that are available in DVB-T standard or a predetermined set of television channels that are available in DVB-T standard.

Then, in step S406, it is checked, if the selected television service of the DVB-T service list 405 is also available in the DVB-H stream. If e.g. the selected television service of the DVB-T service list 405 is television channel CNN, then it is checked whether CNN is included in the DVB-H stream. Note that the DVB-H stream may comprise a plurality of television channels.

If the television service, e.g. a television channel, is available in the DVB-H stream, then, in step S408, decoding of the respective service from the DVB-H stream starts. The decoded picture is then displayed as thumbnail in step S410.

On the other hand, if, in step S406, the selected television service of the DVB-T service list 405 is not available in the DVB-H stream, than in step S412, a message as e.g. "no preview" is displayed instead of a thumbnail. Alternatively, a still picture could be displayed as thumbnail, which still picture had been captured previously while the tuner had been tuned to the corresponding channel. Therefore, the tuner, when tuned to a certain channel, e.g. transmitted via DVB-T, may store a still picture of that channel, which still picture may later on be used as thumbnail. Further, as still picture a predetermined picture could be used. For example, as predetermined picture, a respective logo of a television station could be used. Alternatively or additionally, a same still picture could be used for all or at least one of the television stations for which no thumbnail view is possible. Of course, it is also possible that only if a logo of a respective television station is available, the logo is shown, and if a logo is not available, a predetermined still picture is shown.

Another possibility may also be to omit a respective thumbnail completely if no respective picture for thumbnail view is available. Thus, if no thumbnail view is possible for a certain television station, then there would be no thumbnail and no message "no preview".

In step S414, the next service in the DVB-T service list 405 is selected.

In step S416, it is checked whether the last service in the DVB-T service list 405 has been reached or if the thumbnail screen is full. If not, then processing continues in step S406.

If yes, i.e. the last service has been reached or the thumbnail screen is full (step S416), then, in step S418 a navigation cursor is enabled. In step S420, the user may use the navigation cursor to select a thumbnail.

Upon user selection of a thumbnail, in step S422, tuning to the DVB-T channel corresponding to the user selection is performed. Further, in step S424, the respective DVB-T channel is displayed in full screen.

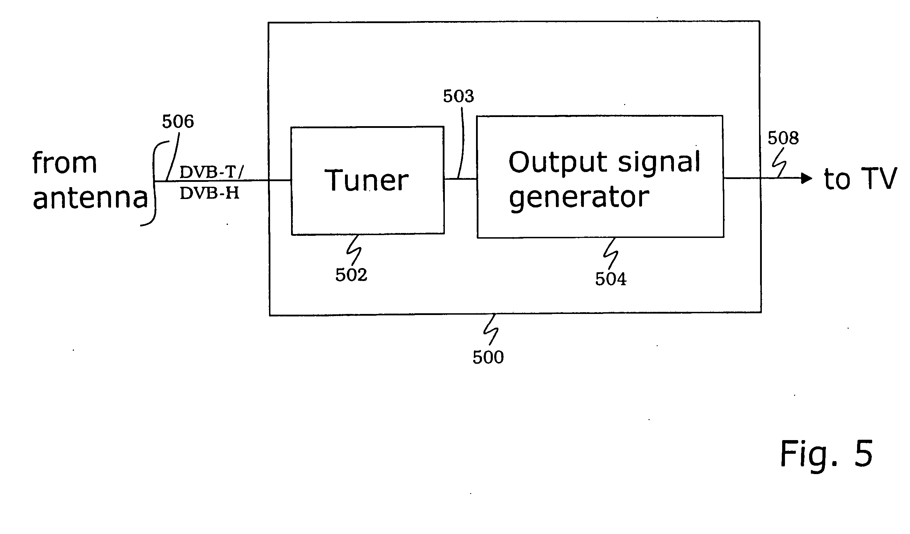

Fig. 5 shows a receiver 500 comprising a tuner 502 and output signal generator 504.

Tuner 502 is configured to tune to a first video signal comprising a first video picture of a first standard, e.g. digital video broadcast terrestrial (DVB-T) and to tune to a second video signal comprising at least one second video picture of a second video standard, which is different from said first video standard. The second video standard may e.g. be the digital video broadcast handheld DVB-H standard. The tuner may further be configured to provide a respective video stream 503 comprising the first and second video picture, respectively.

Output signal generator 504 receives the video stream 503 and generates an output signal 508 for a display e.g. a display of a television set. If tuner 502 is tuned to the first video signal, e.g. DVB-T signal, the output signal comprises the first video picture, and else if the tuner 502 is tuned to the second video signal, e.g. DVB-H. signal, the output signal comprises a thumbnail view of the at least one second video picture of the second standard.

As shown in Fig. 5, tuner 502 is the only tuner of receiver 500. Thus, tuner 502 is used to either tune to the first video signal, e.g. a DVB-T signal, or to tune to a second video signal, e.g. a DVB-H signal.

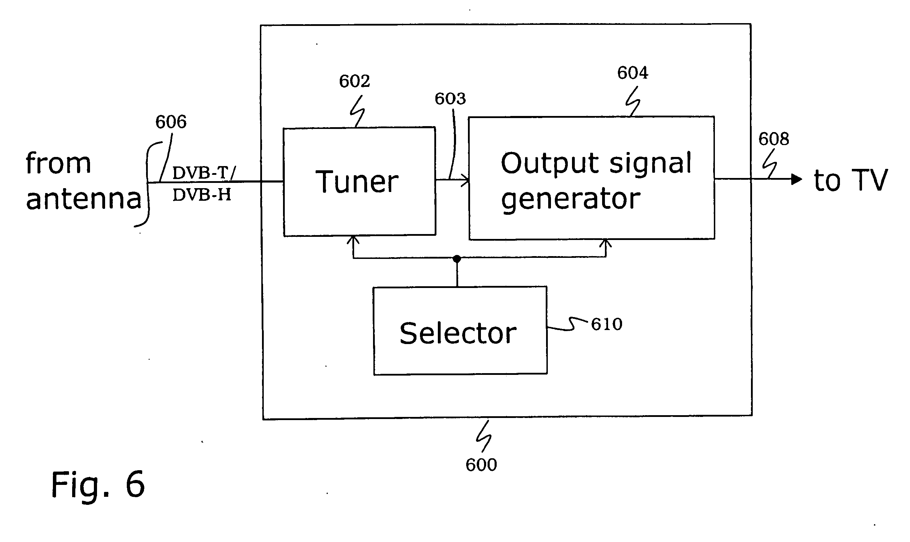

Fig. 6 shows a further embodiment of the invention according to which a receiver 600 comprises a tuner 602, output signal generator 604 and selector 610. As in Fig. 5, tuner 602 receives a first video signal 606 of a first or second standard, e.g. DVB-T or DVB-H standard, and generates a video stream 603. The output signal generator 604 determines the output signal 608 on the basis of the video stream 603.

Selector 610 is configured to allow selection of a thumbnail view and further configured to allow selection of a thumbnail of the thumbnail view.

If the user selects the thumbnail view, selector 610 controls tuner 602 to tune to the second video signal, e.g. DVB-H signal, and provide a respective video stream 603 comprising at least one second video picture. In this case, output signal generator 604 decodes the video picture(s) of video stream 603 and provides the thumbnail view.

On the other hand, if the user selects a thumbnail of the thumbnail view, selector 610 controls tuner 602 to tune to the corresponding first video signal, e.g. DVB-T signal, and to provide a respective video stream 603. Selector 610 further controls output signal generator 604 to decode video stream 603 and to provide the corresponding television picture in full screen e.g. to a television connected to receiver 600. Of course, it is possible that the receiver 600 be incorporated into a television. In this case, the output signal 608 is used within the television to display the respective television picture.

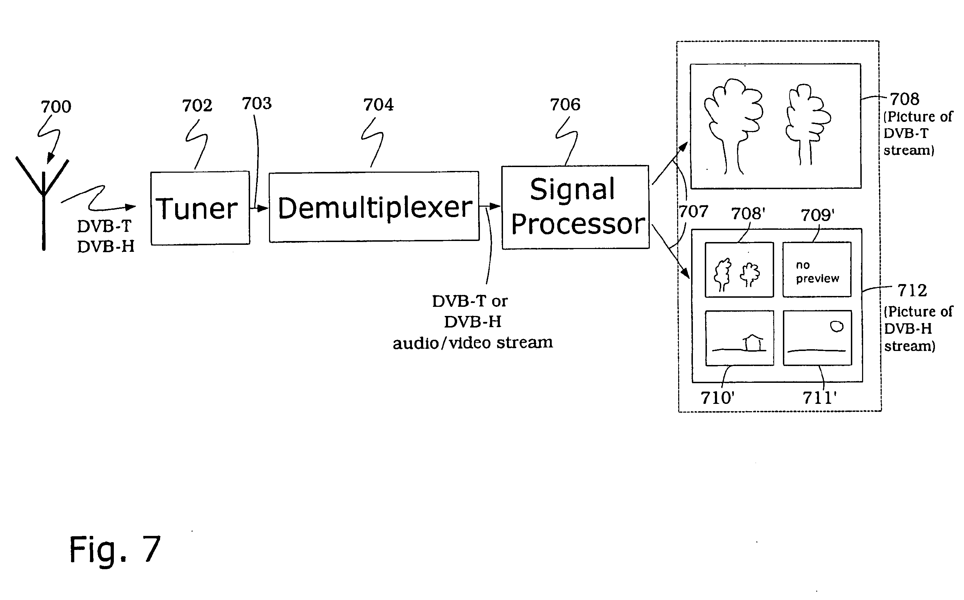

Fig. 7 shows a further diagram of an embodiment of the invention, wherein a broadcast station 700 provides a DVB-T and DVB-H signal. Of course, it is possible that different DVB-T signals are provided by different broadcast stations and the DVB-H signal be provided by a different broadcast station.

DVB-T/H signal is received by tuner 702 deriving a transport stream 703. Transport stream 703 is provided to de-multiplexer 704. De-multiplexer 704 generates a DVB-T audio and video stream or DVB-H audio and video stream. If the thumbnail view is selected, than de-multiplexer 704 generates a DVB-H video stream and DVB-H audio stream. If, however, no thumbnail view is selected, i.e. the user wants to watch a television program in full screen, then de-multiplexer 704 provides a DVB-T video stream and DVB-T audio stream.

Signal processor 706 generates an output signal 707 comprising either a picture 708 in full screen of a DVB-T stream or a thumbnail view 712 comprising thumbnails 708', 709', 710', 711',... of pictures of the DVB-H stream.

As seen, in thumbnail view 712, picture 708 of the DVB-T stream may be included as thumbnail 708'. If a television channel that is available via a respective DVB-T signal is not available or included in the DVB-H stream, then in thumbnail view 712, a respective message may appear instead of a thumbnail picture. As seen in Fig. 7, thumbnail 709' does not show a picture, but a message "no preview".

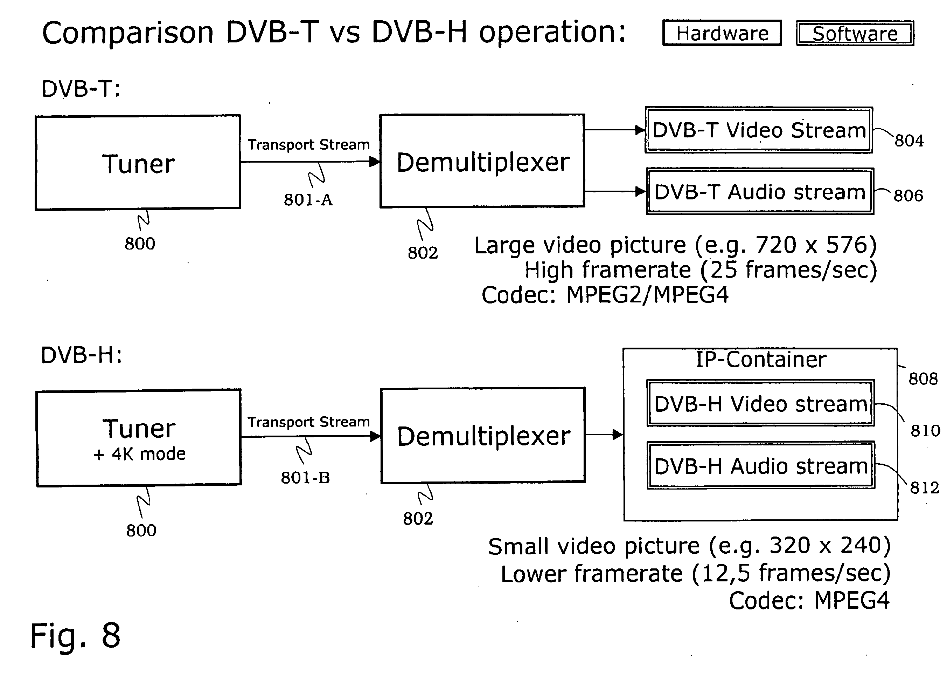

Fig. 8 shows a comparison between DVB-T and DVB-H operation.

The operation according to DVB-T is shown in the upper half of Fig. 8. Accordingly, a tuner 800 is operated in normal DVB-T mode and provides a transport stream 801-A to de-multiplexer 802. De-multiplexer 802 generates a DVB-T video stream 804 and DVB-T audio stream 806. The DVB-T video stream 804 comprises a large video picture, e.g. 720 x 576 pixels at a high frame rate, e.g. 25 frames per second, wherein as codec MPEG2 or MPEG4, i.e. an advanced video codec AVC is used.

In DVB-H operation, tuner 800 may be operated in 4K mode and generates a transport stream 801-B. It is also possible that tuner 800 be operated in 2K or 8K mode. In general, both standards, i.e. DVB-T and DVB-H are using COFDM modulation which has several modulation modes. For DVB-T the modes "2K" and "8K" are allowed. For DVB-H the standard had been extended to allow "2K", "4K" and "8K" mode. Therefore, it is not required that the transmission is using 4K mode as shown in Fig. 8 - this is just an additional optional surplus on the DVB-T options.

Based on transport stream 801-B, de-multiplexer 802 derives an IP container 808. IP container 808 comprises a DVB-H video stream 810 and DVB-H audio stream 812. DVB-H video stream 810 comprises a small picture, e.g. 320 x 240 pixels, at a lower frame rate, e.g. 12,5 frames per second, wherein as codec MPEG4 may be used.

Tuner 800 and de-multiplexer 802 correspond to hardware components as indicated by the pattern corresponding to hardware realizations (see legend of Fig. 8). Contrary, the further processing of the de-multiplexed transport stream, i.e. the DVB-T audio/video stream 804, 806 in DVB-T operation and the DVB-H audio/video stream 810, 812 in DVB-H operation, is realized in software. Thus, the system becomes very flexible and may easily be incorporated into existing DVB-T receivers. Also, because the same hardware may be used in DVB-T and DVB-H operation, cost may be kept low.

Thus, according to an embodiment of the invention, a method for creating live video mosaics on digital television receivers may be provided. Currently, in DVB-T transmissions there is no mosaic service (thumbnail view) available as it exists for some DVB-S providers. The DVB-S providers, however, need to provide a special channel transmitting the thumbnail view.

As shown above, according to embodiments of the invention, it is possible that a thumbnail screen with live video pictures be provided by using a modified DVB-T operation and including DVB-H operation.

According to the embodiments, it is thus possible to provide a thumbnail view, which is not possible for DVB-T, because in DVB-T services, i.e. television channels, are spread over a number of frequencies. In order to provide a thumbnail view based only on DVB-T signal, the tuner would need to be retuned to access all the services and this would stop the live playback of other services, i.e. it would not be possible to provide live thumbnail pictures.

This drawback is overcome as described above, because a thumbnail view with many live video pictures can be generated with all channels in the channel list. The thumbnail generation is, thereby, independent from the service providers. Further, the technical effort to decode DVB-H on a DVB-T receiver is relatively small: the transmitting frequencies are the same, the stream format is the same, only the size, frame rate and codec of the video content is different. Note that the DVB-H codec, e.g. advanced video codec AVC, MPEG4, is standardized and about to be implemented for DVB-T as well.

The different size and frame rate in DVB-H is an advantage: the video picture would need to be resized to a thumbnail picture anyway. Therefore, the smaller DVB-H picture may be used as thumbnail without resizing.

Further, as is apparent from the above, only one tuner may be required. Also, no multimedia home platform MHP may be required as would be the case for DVB-S mosaic. A multimedia home platform is a technology, e.g. used in Europe or other countries, for offering interactive TV-related multimedia applications. Applications such as DVB-S/C mosaic services can, but must not, be made using the MHP mechanism. In this case the broadcaster or signal provider must make and maintain the mosaic application. This is not a build-in feature of a television set or set top box. Very few receivers in Europe support MHP. Another technology according to prior art that could be used is the MHEG which is a system competing against MHP. MHEG is only used in the United Kingdom UK and has fairly good support by the receivers sold in UK. Other solutions that could be used for DVB-S/C mosaic services are provider's specific software implementations on set top boxes with provider's specific software versions (some cable network providers distribute their own boxes with own software). However, all of this complicated additional software/hardware may not be needed when using a method of displaying video pictures as explained above.

## Claims

1. A method of displaying video streams, comprising:
receiving a first video signal of the digital video broadcasting - terrestrial (DVB-T) standard with a tuner (702), said first video signal comprising a first video stream (708);
displaying said first video stream (708);
receiving one single second video signal of the digital video broadcasting - handheld (DVB-H) standard with said tuner (702), said second video signal comprising a plurality of second video streams, wherein said DVB-H standard is different from said DVB-T standard and enables transmission of a video stream only with a lower bandwidth than said DVB-T standard;
decoding a plurality of second video streams at the same time;
switching to a thumbnail view (712) comprising thumbnails (708', 710', 711') of the plurality of second video streams, the thumbnails (708, 710; 711) corresponding to live pictures of a corresponding video stream;
displaying said plurality of second video streams in said thumbnail view (712).

2. Method according to claim 1, wherein said first and second video signal are decoded using a same tuner (702), a same de-multiplexer and/or a same hardware.

3. Method according to claim 1, wherein, when switching to said thumbnail view (712), said tuner (702) is tuned to said second video signal of said DVB-H standard.

4. Method according to any of claims 1 or 3, wherein said first video stream (708) corresponds to a television channel which is selected from a set of available or predetermined television channels of said DVB-T standard, and wherein said second video streams for said thumbnail view (712) comprise only video streams corresponding to said available or predetermined television channels.

5. Method according to claim 4, wherein, if no second video stream corresponding to a respective available or predetermined television channel of said DVB-T standard is available, a message is displayed in said thumbnail view (712), indicating that no preview of the respective channel is available.

6. Method according to claim 4 or 5, wherein a certain television channel is selectable within said thumbnail view (712) by moving a cursor to a certain thumbnail.

7. Method according to claim 6, wherein, upon selection of a certain television channel, said tuner (702) is tuned to a selected first video signal corresponding to said certain television channel in said DVB-T standard.

8. Method according to any of the preceding claims, wherein said at least one second video stream is used without resizing for said thumbnail view (712).

9. A computer program product including computer program instructions that cause a computer to execute a method of displaying video streams, comprising:
receiving a first video signal of the digital video broadcasting - terrestrial (DVB-T) standard with a tuner (702), said first video signal comprising a first video stream (708);
displaying the first video stream (708);
receiving one single second video signal of the digital video broadcasting - handheld (DVB-H) standard with said tuner (702), said second video signal comprising a plurality of second video streams, wherein said DVB-H standard is different from said DVB-T standard and enables transmission of a video stream only with a lower bandwidth than said DVB-T standard;
decoding a plurality of second video streams at the same time;
switching to a thumbnail view (712) comprising thumbnails (708', 710', 711') of the plurality of second video streams, the thumbnails (708, 710; 711) corresponding to live pictures of a corresponding video stream;
displaying said plurality of second video streams in said thumbnail view (712).

10. A receiver comprising:
a tuner (702) configured to tune to a first video signal comprising a first video stream (708) of the digital video broadcasting - terrestrial (DVB-T) standard, and to tune to a second video signal comprising a plurality of second video streams of the digital video broadcasting - handheld (DVB-H) standard, which is different from said DVB-T standard and enables transmission of a video stream only with a lower bandwidth than said DVB-T standard, the tuner (702) further configured to provide a video stream comprising said first and second video stream, respectively;
an output signal generating mechanism configured to generate an output signal for a display, wherein, if said tuner (702) is tuned to said first video signal, said output signal comprises said first video stream (708), and else, if said tuner (702) is tuned to said second video signal, the receives decodes a plurality of second video streams at the sometime said output signal comprises a thumbnail view (712) comprising thumbnails (708; 710', 711') of said plurality of second video streams.

11. Receiver according to claim 10, wherein said tuner (702) is the only tuner of said receiver.

12. Receiver according to any of claims 10 to 11, wherein said at least one second video stream is used for said thumbnail view (712) without being resized.

13. Receiver according to any of claims 10 to 12, comprising
a selection mechanism configured to allow selection of a user selected second video stream of said thumbnail view (712), wherein, upon selection, said tuner (702) tunes to a corresponding first video signal comprising a same video stream as said respective user selected second video stream and provides a video stream comprising said first video stream (708).

## Patentansprüche

1. Verfahren zum Anzeigen von Videoströmen, umfassend:
Empfangen eines ersten Videosignals des Standards Digital Video Broadcasting - Terrestrial bzw. DVB-T mit einem Tuner (702), wobei das erste Videosignal einen ersten Videostrom (708) umfasst;
Anzeigen des ersten Videostroms (708);
Empfangen eines einzigen zweiten Videosignals des Standards Digital Video Broadcasting - Handheld bzw. DVB-H mit dem Tuner (702), wobei das zweite Videosignal mehrere zweite Videoströme umfasst, wobei der DVB-H-Standard von dem DVB-T-Standard verschieden ist und Übertragung eines Videostroms nur mit einer geringeren Bandbreite als beim DVB-T-Standard ermöglicht;
Dekodieren mehrerer zweiter Videoströme zur selben Zeit;
Wechseln zu einer Thumbnail-Ansicht (712), die Thumbnails (708', 710', 711') der mehreren zweiten Videoströme umfasst, wobei die Thumbnails (708', 710', 711') Live-Bildern eines entsprechenden Videostroms entsprechen;
Anzeigen der mehreren zweiten Videoströme in der Thumbnail-Ansicht (712).

2. Verfahren nach Anspruch 1, wobei das erste und zweite Videosignal unter Verwendung eines gleichen Tuners (702), eines gleichen Demultiplexers und/oder einer gleichen Hardware dekodiert werden.

3. Verfahren nach Anspruch 1, wobei beim Wechseln zu der Thumbnail-Ansicht (712) der Tuner (702) auf das zweite Videosignal des DVB-H-Standards eingestellt wird.

4. Verfahren nach einem der Ansprüche 1 oder 3, wobei der erste Videostrom (708) einem Fernsehkanal entspricht, der aus einer Menge von verfügbaren oder vorbestimmten Fernsehkanälen des DVB-T-Standards ausgewählt wird und wobei die zweiten Videoströme für die Thumbnail-Ansicht (712) nur Videoströme umfassen, die den verfügbaren oder vorbestimmten Fernsehkanälen entsprechen.

5. Verfahren nach Anspruch 4, wobei, wenn kein zweiter Videostrom, der einem jeweiligen verfügbaren oder vorbestimmten Fernsehkanal des DVB-T-Standards entspricht, verfügbar ist, in der Thumbnail-Ansicht (712) eine Nachricht angezeigt wird, die angibt, dass keine Vorschau des jeweiligen Kanals verfügbar ist.

6. Verfahren nach Anspruch 4 oder 5, wobei durch Bewegen eines Cursors zu einem bestimmten Thumbnail ein bestimmter Fernsehkanal innerhalb der Thumbnail-Ansicht (712) auswählbar ist.

7. Verfahren nach Anspruch 6, wobei bei Auswahl eines bestimmten Fernsehkanals der Tuner (702) auf ein ausgewähltes erstes Videosignal eingestellt wird, der dem bestimmten Fernsehkanal in dem DVB-T-Standard entspricht.

8. Verfahren nach einem der vorhergehenden Ansprüche, wobei der mindestens eine zweite Videostrom ohne Umbemessung für die Thumbnail-Ansicht (712) verwendet wird.

9. Computerprogrammprodukt, das Computerprogrammanweisungen umfasst, die bewirken, dass ein Computer ein Verfahren zum Anzeigen von Videoströmen ausführt, umfassend:
Empfangen eines ersten Videosignals des Standards Digital Video Broadcasting - Terrestrial bzw. DVB-T mit einem Tuner (702), wobei das erste Videosignal einen ersten Videostrom (708) umfasst;
Anzeigen des ersten Videostroms (708);
Empfangen eines einzigen zweiten Videosignals des Standards Digital Video Broadcasting - Handheld bzw. DVB-H mit dem Tuner (702), wobei das zweite Videosignal mehrere zweite Videoströme umfasst, wobei der DVB-H-Standard von dem DVB-T-Standard verschieden ist und Übertragung eines Videostroms nur mit einer geringeren Bandbreite als beim DVB-T-Standard ermöglicht;
Dekodieren mehrerer zweiter Videoströme zur selben Zeit;
Wechseln zu einer Thumbnail-Ansicht (712), die Thumbnails (708', 710', 711') der mehreren zweiten Videoströme umfasst, wobei die Thumbnails (708', 710', 711') Live-Bildern eines entsprechenden Videostroms entsprechen;
Anzeigen der mehreren zweiten Videoströme in der Thumbnail-Ansicht (712).

10. Empfänger, umfassend:
einen Tuner (702), der dafür ausgelegt ist, auf ein erstes Videosignal einzustellen, das einen ersten Videostrom (708) des Standards Digital Video Broadcasting - Terrestrial bzw. DVB-T umfasst, und auf ein zweites Videosignal einzustellen, das mehrere zweite Videoströme des Standards Digital Video Broadcasting - Handheld bzw. DVB-H umfasst, der von dem DVB-T-Standard verschieden ist und Übertragung eines Videostroms nur mit einer geringeren Bandbreite als der DVB-T-Standard ermöglicht, wobei der Tuner (702) ferner dafür ausgelegt ist, einen Videostrom bereitzustellen, der den ersten bzw. zweiten Videostrom umfasst;
einen Ausgangssignal-Erzeugungsmechanismus, der dafür ausgelegt ist, ein Ausgangssignal zur Anzeige zu erzeugen, wobei, wenn der Tuner (702) auf das erste Videosignal eingestellt ist, das Ausgangssignal den ersten Videostrom (708) umfasst, und andernfalls, wenn der Tuner (702) auf das zweite Videosignal eingestellt ist, der Empfänger mehrere zweite Videoströme zur gleichen Zeit dekodiert, das Ausgangssignal eine Thumbnail-Ansicht (712) umfasst, die Thumbnails (708', 710', 711') der mehreren zweiten Videoströme umfasst, wobei die Thumbnails (708', 710', 711') Live-Bildern eines entsprechenden Videostroms entsprechen.

11. Empfänger nach Anspruch 10, wobei der Tuner (702) der einzige Tuner des Empfängers ist.

12. Empfänger nach einem der Ansprüche 10 bis 11, wobei der mindestens eine zweite Videostrom für die Thumbnail-Ansicht (712) verwendet wird, ohne umbemessen zu werden.

13. Empfänger nach einem der Ansprüche 10 bis 12, umfassend:
einen Auswahlmechanismus, der dafür ausgelegt ist, Auswahl eines benutzerausgewählten zweiten Videostroms der Thumbnail-Ansicht (712) zu erlauben, wobei sich der Tuner (702) bei Auswahl auf ein entsprechendes erstes Videosignal einstellt, das einen gleichen Videostrom wie der jeweilige benutzerausgewählte zweite Videostrom umfasst, und einen Videostrom bereitstellt, der den ersten Videostrom (708) umfasst.

## Revendications

1. Procédé d'affichage de flux de données vidéo, comprenant :
la réception d'un premier signal vidéo de la norme DVB-T (diffusion vidéo numérique - terrestre) avec un syntoniseur (702), ledit premier signal vidéo comprenant un premier flux de données vidéo (708) ;
l'affichage dudit premier flux de données vidéo (708) ;
la réception d'un second signal vidéo unique de la norme DVB-H (diffusion vidéo numérique - portable) avec ledit syntoniseur (702), ledit second signal vidéo comprenant une pluralité de seconds flux de données vidéo, ladite norme DVB-H étant différente de ladite norme DVB-T et permettant uniquement la transmission d'un flux de données vidéo ayant une largeur de bande inférieure à celle de ladite norme DVB-T ;
le décodage simultané d'une pluralité de seconds flux de données vidéo ;
la commutation sur une vue d'imagettes (712) comprenant des imagettes (708', 710', 711') de la pluralité de seconds flux de données vidéo, les imagettes (708', 710', 711') correspondant à des images animées d'un flux de données vidéo correspondant ;
l'affichage de ladite pluralité de seconds flux de données vidéo dans ladite vue d'imagettes (712).

2. Procédé selon la revendication 1, dans lequel lesdits premier et second signaux vidéo sont décodés en utilisant un même syntoniseur (702), un même démultiplexeur et/ou un même matériel.

3. Procédé selon la revendication 1, dans lequel, à la commutation sur ladite vue d'imagettes (712), ledit syntoniseur (702) est accordé sur ledit second signal vidéo de ladite norme DVB-H.

4. Procédé selon l'une quelconque des revendications 1 à 3, dans lequel ledit premier flux de données vidéo (708) correspond à un canal de télévision qui est sélectionné parmi un ensemble de canaux de télévision disponibles ou prédéterminés de ladite norme DVB-T, et dans lequel lesdits seconds flux de données vidéo de ladite vue d'imagettes (712) comprend uniquement des flux de données vidéo correspondant auxdits canaux de télévision disponibles ou prédéterminés.

5. Procédé selon la revendication 4, dans lequel, si aucun second flux de données vidéo correspondant à un canal de télévision disponible ou prédéterminé respectif de ladite norme DVB-T n'est disponible, un message est affiché dans ladite vue d'imagettes (712), indiquant qu'aucune prévisualisation du canal respectif n'est possible.

6. Procédé selon la revendication 4 ou 5, dans lequel un certain canal de télévision est sélectionnable dans ladite vue d'imagettes (712) en déplaçant un curseur sur une certaine imagette.

7. Procédé selon la revendication 6, dans lequel, à la sélection d'un certain canal de télévision, ledit syntoniseur (702) est accordé sur un premier signal vidéo sélectionné correspondant audit certain canal de télévision de ladite norme DVB-T.

8. Procédé selon l'une quelconque des revendications précédentes, dans lequel ledit au moins un second flux de données vidéo est utilisé sans redimensionnement de ladite vue d'imagettes (712).

9. Produit de programme informatique comportant des instructions de programme informatique qui amènent un ordinateur à exécuter un procédé d'affichage de flux de données vidéo, comprenant :
la réception d'un premier signal vidéo de la norme DVB-T (diffusion vidéo numérique - terrestre) avec un syntoniseur (702), ledit premier signal vidéo comprenant un premier flux de données vidéo (708) ;
l'affichage du premier flux de données vidéo (708) ;
la réception d'un second signal vidéo unique de la norme DVB-H (diffusion vidéo numérique - portable) avec ledit syntoniseur (702), ledit second signal vidéo comprenant une pluralité de second flux de données vidéo, ladite norme DVB-H étant différente de ladite norme DVB-T et permettant uniquement la transmission d'un flux de données vidéo ayant une largeur de bande inférieure à celle de ladite norme DVB-T ;
le décodage simultané d'une pluralité de seconds flux de données vidéo ;
la commutation sur une vue d'imagettes (712) comprenant des imagettes (708', 710', 711') de la pluralité de seconds flux de données vidéo, les imagettes (708', 710', 711') correspondant à des images animées d'un flux de données vidéo correspondant ;
l'affichage de ladite pluralité de seconds flux de données vidéo dans ladite vue d'imagettes (712).

10. Récepteur comprenant :
un syntoniseur (702) configuré pour s'accorder sur un premier signal vidéo comprenant un premier flux de données vidéo (708) de la norme DVB-T (diffusion vidéo numérique - terrestre) et s'accorder sur un second signal vidéo comprenant une pluralité de seconds flux de données vidéo de la norme DVB-H (diffusion vidéo numérique - portable) laquelle est différente de ladite norme DVB-T et permet uniquement la transmission d'un flux de données vidéo ayant une largeur de bande inférieure à celle de ladite norme DVB-T, le syntoniseur (702) étant configuré en outre pour fournir un flux de données vidéo comprenant lesdits premier et second flux de données vidéo, respectivement ;
un mécanisme de génération de signaux de sortie configuré pour générer un signal de sortie d'un affichage, dans lequel, si ledit syntoniseur (702) est accordé sur ledit premier signal vidéo, ledit signal de sortie comprend ledit premier flux de données vidéo (708), ou bien, si ledit syntoniseur (702) est accordé sur ledit second signal vidéo, le récepteur décode simultanément une pluralité de seconds flux de données vidéo,
ledit signal de sortie comprenant une vue d'imagettes (712) comprenant des imagettes (708', 710', 711') de ladite pluralité de seconds flux de données vidéo, les imagettes (708', 710', 711') correspondant à des images animées d'un flux de données vidéo correspondant.

11. Récepteur selon la revendication 10, dans lequel ledit syntoniseur (702) est le seul syntoniseur dudit récepteur.

12. Récepteur selon l'une quelconque des revendications 10 à 11, dans lequel ledit au moins un second flux de données vidéo est utilisé pour ladite vue d'imagettes (712) sans être redimensionné.

13. Récepteur selon l'une quelconque des revendications 10 à 12, comprenant
un mécanisme de sélection configuré pour permettre la sélection d'un second flux de données vidéo sélectionné par l'utilisateur de ladite vue d'imagettes (712), dans lequel, à la sélection, ledit syntoniseur (702) s'accorde sur un premier signal vidéo correspondant comprenant un même flux de données vidéo comme ledit second flux de données vidéo sélectionné par l'utilisateur respectif et fournit un flux de données vidéo comprenant ledit premier flux de données vidéo (708).
